Europäisches Patentamt

European Patent Office

Office européen des brevets

(19)

(11) Publication number: 0 313 334
A2

# (12) EUROPEAN PATENT APPLICATION

(21) Application number: 88309812.1

(22) Date of filing: 19.10.88

(51) Int. Cl.4: G 11 B 5/64
G 11 B 11/10, G 11 B 5/84

(30) Priority: 20.10.87 JP 262763/87
11.11.87 JP 282954/87

(43) Date of publication of application:
26.04.89 Bulletin 89/17

(84) Designated Contracting States: DE GB

(71) Applicant: Hitachi Maxell Ltd.
No 1-1-88, Ushitora Ibaraki-shi
Osaka-fu (JP)

(72) Inventor: Sakemoto, Akito
4-6, Nishinodai Yawaramura
Tsukuba-gun Ibaraki-ken (JP)

Shimazaki, Katsusuke
1468-5, Furumagi Ishigemachi
Yuki-gun Ibaraki-ken (JP)

Tsuburaya, Yoshitane
1-2-2-401, Togashira
Toride-shi (JP)

(74) Representative: Cresswell, Thomas Anthony et al
J.A. Kemp & Co. 14 South Square Gray's Inn
London WC1R 5EU (GB)

(54) Magneto-optic recording medium and method of magneto-optic recording using the same medium.

(57) A magneto-optic recording medium and a method of magneto-optic recording are disclosed. The magneto-optic recording medium comprises a multilayered recording film including a magneto-optic recording film (3) having a magnetically anisotropic characteristic in the vertical direction, formed on a transparent substrate (1), and a perpendicular magnetization film (4) formed on the magneto-optic recording film (3) with the coercive force thereof small at room temperature and the Curie point thereof sufficiently high. By use of this magneto-optic recording medium, a magnetic field with the direction thereof reversed in accordance with the level of the desired recording signal is applied to the perpendicular magnetization film (4) thereby to record the desired signal therein. The temperature of the magneto-optic recording film (3) is increased thereby to transfer the magnetization recording in the perpendicular magnetization film (4) to the magneto-optic recording film (3), thus recording the desired recording signal in the magneto-optic recording film (3).

**Description**

## MAGNETO-OPTIC RECORDING MEDIUM AND METHOD OF MAGNETO-OPTIC RECORDING USING THE SAME MEDIUM

### BACKGROUND OF THE INVENTION

The present invention relates to a magneto-optic recording medium capable of overwrite and a method of magneto-optic recording utilizing such a medium.

A magneto-optic recording and reproduction system is well known as one of the systems for recording and reproducing signals. In this method, a magneto-optic recording film made of a material whose coercive force extremely decreases with the increase in temperature is formed on a substrate to constitute a recording medium. A magnetic field and a laser beam for increasing the temperature of the recording medium are applied to the recording medium, so that the coercive force of the magneto-optic recording film is decreased below the intensity of the magnetic field applied by the temperature increase thereby to magnetize the medium along the direction of the magnetic field, thereby recording the desired signal. The magneto-optic recording film recorded with the desired signal, on the other hand, is radiated with a weak laser beam and thus magnetized to cause the Kerr effect of the laser beam, which effect is detected to reproduce the desired signal.

With regard to this method of recording signals in such a recording medium (that is, a magneto-optic recording medium), a recording system is well known which is capable of erasure of the already-recorded signal by new recording, namely, what is called "the overwrite" (See JP-A-60-48806, for example).

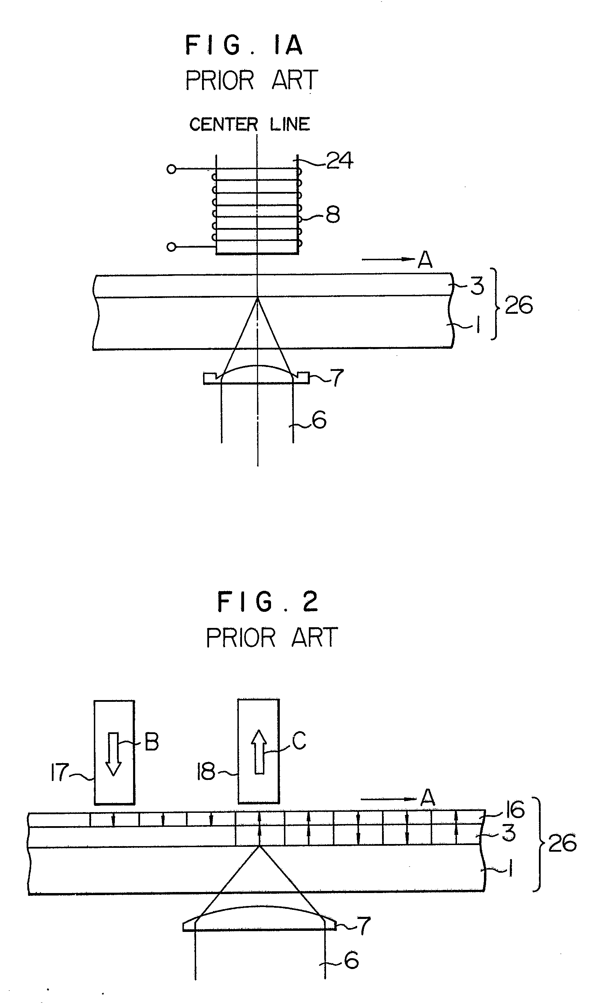

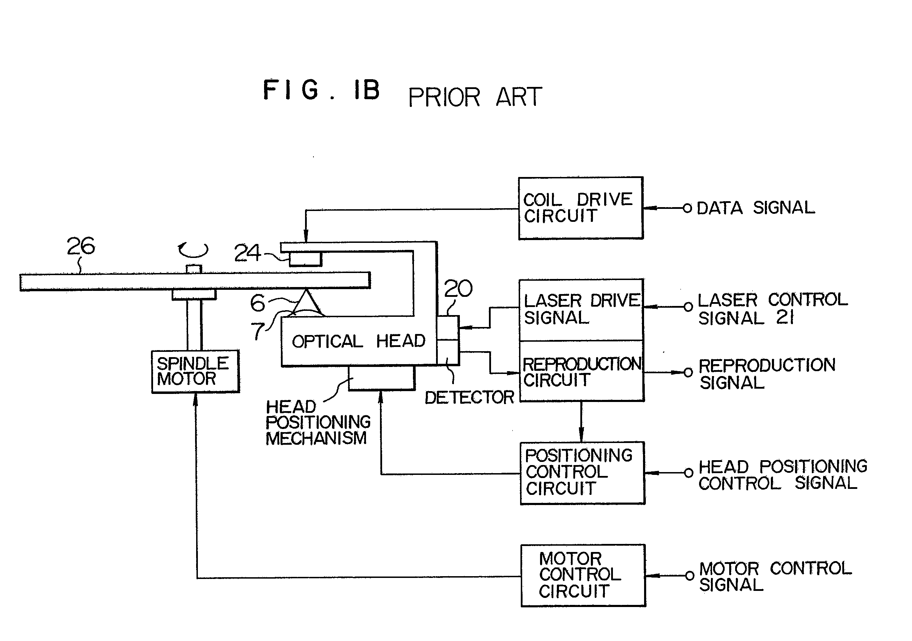

In this system, the intensity of the laser beam radiated is fixed while the direction of the magnetic field applied is reversed according to the level of the recording signal. An example of such a system will be explained with reference to Figs. 1A and 1B.

In the drawings, a magnetic core 24 has a coil 8 through which a signal current due to a digital signal is caused to flow. This signal current changes in polarity in accordance with the "1" or "0" bit status of the digital signal, and therefore the magnetic field generated from the magnetic core 24 has a constant intensity and is reversed in direction in accordance with the "1" or "0" bit status of the digital signal. Such a magnetic field is applied to a recording medium 26 comprising a transparent substrate 1 and a magneto-optic recording film 3. On the other hand, a laser beam 6 of fixed intensity is converged by a focus lens 7 and is kept radiated on the magneto-optic recording film from the substrate 1 side. As a result of radiation of the laser beam 6, the magneto-optic recording film 3 is increased in temperature to reduce the coercive force thereof below the intensity of the applied magnetic field. The magneto-optic recording film 3 is thus continuously magnetized by the magnetic field applied thereto from the magnetic core 24, and therefore even when a signal is already recorded in the recording medium 26, such a signal is erased with the recording of a new signal, thereby making possible an overwrite.

### SUMMARY OF THE INVENTION

The prior art recording systems described above, however, requires the application of a magnetic field to the part of the magneto-optic recording film 3 increased in temperature by the laser beam 6, thereby making it necessary that the center axis of the magnetic core 24 coincide with that of the laser beam 6 (that is, the optical axis of the focus lens 7). (See the center line in Fig. 1A.)

In this arrangement of the magnetic core 24 and the focus lens 7, however, the magnetic field generating means cannot be constructed with a closed magnetic path with the magnetic core, and the resulting large magnetic reluctance makes it impossible to generate a strong magnetic field. A high-speed overwrite is thus made difficult. If the magnetic field is to be intensified, on the other hand, it is necessary to apply a large current in the coil 8 resulting in an increased power consumption. A high-speed data transfer is thus made impossible by the effect of the inductance of the coil 8 and the through rate of a drive circuit.

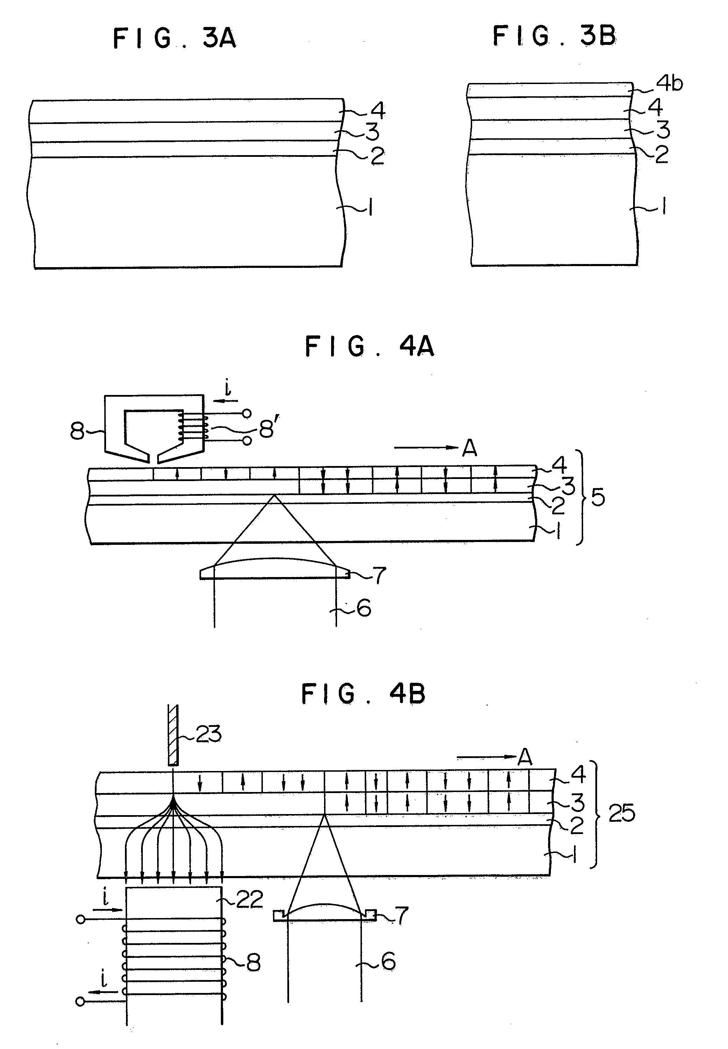

A thesis entitled "Single-Beam Overwrite System Using Multilayered Magneto-optic Recording Medium" contained in the "Text Collection of Speeches for the 34th Applied Physics-Related Joint Lecture Meeting, 1987", p. 721, 28 p-ZL-3. (hereinafter referred to as "the 34th Applied Physics Thesis" discloses a magneto-optic recording medium with a multilayered recording film. This recording medium will be explained with reference to Fig. 2.

In Fig. 2, a magneto-optic recording medium 26 comprises a transparent substrate 1, a magneto-optic recording film 3 formed on the substrate 1, and an auxiliary magneto-optic recording film 16 formed on them with a recording film formed of the magneto-optic recording film 3 and the auxiliary magneto-optic recording film 16. The magneto-optic recording film 3 is made of an amorphous magnetic material of TbFe group, and the auxiliary magneto-optic recording film 16 of an amorphous magnetic material of GdTbFe or the like small in coercive force as compared with the magneto-optic recording film 3 at room temperature and high in Curie point.

The feature of the conventional recording medium shown in Fig. 2 lies in the use of a lamination of a magneto-optic recording film comprising a main recording film (ex. TbFe alloy) 3 and an auxiliary recording film (ex. GdTbFe alloy) 16 smaller in coercive force at room temperature and higher in Curie point than the main recording film. The information recording system and the function of the auxiliary magneto-optic recording film 16 shown in Fig. 16 will be explained.

A DC magnet 18 is arranged on the auxiliary film 16 side of the magneto-optic recording medium 26, and a focus lens 7 of an optical system for a laser beam 6 on the substrate 1 side of the medium 26 in opposed relations with the magnet 18. Further, a second magnetic head 17 made of a DC magnet is arranged in advance of the magnetic head 18 of a DC magnet along the direction of motion (arrow A) of the magneto-optic recording medium 26.

The DC magnet 17 generates a DC magnetic field stronger than the coercive force of the auxiliary film 16 at room temperature and weaker than the coercive force of the magneto-optic recording film 3 at room temperature. The auxiliary film 16 alone is magnetized by this DC magnetic field along the direction thereof. The DC magnet 18, on the other hand, generates a DC magnetic field weaker than the magnetic field generated at room temperature from the magnetized portion of the auxiliary film 16. The direction of the DC magnetic field generated from the DC magnet 18 is the opposite to that of the DC magnetic field generated by the DC magnet 17. If the former is indicated by arrow C, the latter is designated by arrow B.

A laser source 20, on the other hand, is driven by a signal from a signal source 21, and generates a laser beam modified in intensity by this signal. The signal produced from the signal source 21 is digital, and by way of explanation, the output laser beam from the laser source 20 is assumed to be high in intensity at the "1" bit of the digital signal and low in intensity at the "0" bit status thereof. This laser beam is converted into parallel beams (that is, a laser beam 6) through a colimeter lens. This laser beam 6 is focused through a focus lens 7 and radiated on the magneto-optic recording film 3 of the magneto-optic recording medium 26.

As a result, the portions of the magneto-optic recording film 3 and the auxiliary film 16 near to the point of radiation of the laser beam 6 increase in temperature. The output power of the laser source 20 is set in such an appropriate manner that upon radiation of the laser beam 6 with high intensity, the temperature of the magneto-optic recording film 3 and the auxiliary film 16 increases beyond the Curie points thereof while the coercive force of the magneto-optic recording film 3 and the auxiliary film 16 decreased below the intensity of the DC magnetic field derived from the DC magnet 18. When the laser beam 6 is radiated with low intensity, by contrast, the temperature of the magneto-optic recording film 3 is higher than the Curie point thereof while the temperature of the auxiliary film 16 is lower than the Curie point thereof, with the result that the coercive force of the auxiliary film 16 is higher than the intensity of the magnetic field derived from the magnet 18 while the coercive force of the magneto-optic recording film 3 is higher than the intensity of the magnetic field of the DC magnet 18 but lower than the intensity of the magnetic field derived from the magnetized portion of the auxiliary film 16.

Thus, upon radiation of the laser beam 6 with high intensity, the magneto-optic recording film 3 and the auxiliary film 16 are magnetized by the magnetic field from the DC magnet 18 along the direction thereof, while upon radiation of the laser beam 6 with low intensity, the magneto-optic recording film 3 is magnetized by the magnetic field from the magnetized portion of the auxiliary film 16 along the direction thereof. In the latter case, the magnetization of the auxiliary film 16 is considered to have been transferred to the magneto-optic recording film 3. As a consequence, the magneto-optic recording film 3 comes to carry a magnetization pattern including a portion magnetized by the magnetic field due to a magnetic head formed of the magnet 17 and a portion magnetized by the magnetic field due to a magnetic head formed of a DC magnet 18. The former magnetized portion represents the "0" bit status of the digital signal from the signal source 21, and the latter magnetized portion the "1" bit status thereof.

In this fashion, a digital signal is recorded in the magneto-optic recording film 3. As obvious from the foregoing explanation, the magnetic head formed of the DC magnet 17 is used for recording the "0" bit of the digital signal, and the magnetic head formed of the DC magnet 18 for recording the "1" bit thereof.

Even when a signal is already recorded in the magneto-optic recording medium 26, it is erased from the auxiliary film 16 by the DC magnetic field due to the DC magnet 17 and from the magneto-optic recording film 3 by the DC magnetic field due to the DC magnet 18 and the laser beam 6, thus making an overwrite possible.

In the case where a TbFe alloy is used as a material of the magneto-optic recording film, the recording film is easily corroded by the oxygen and moisture in the air. To prevent the corrosion of the magneto-optic recording film, the conventional recording media comprise a special protective film covered on the outer surface of the magneto-optic recording film to keep off oxygen and moisture contained in the air.

In Fig. 2, as described already, the magneto-optic recording film 3 is increased to a first temperature higher than the Curie point thereof but lower than the Curie point of the auxiliary film 16 on one occasion, and both the magneto-optic film 3 and the auxiliary film 16 are increased to a second temperature higher than the Curie point of the auxiliary film 16 on others. The thesis cited above discloses an example using a TbFe amorphous for the magneto-optic recording film 3 and a GdTbFe amorphous material as a magnetic recording material for the auxiliary film 16. The Curie point of the former is 140°C, and that of the latter 160°C. In the case of simultaneous heating of the magneto-optic recording film 3 and the auxiliary film 16, therefore, the heating temperature (second temperature) may be kept comparatively low with a lower power of the laser beam 6. When the magneto-optic recording film 3 is heated to the first temperature, however, it is necessary to set the first temperature within a very narrow range of 20°C (= 160 to 140), thus making it very difficult to control the intensity of the laser beam 6. One idea to overcome this problem would be to use a material that can cover this temperature range sufficiently for the magneto-optic recording film 3 and the auxiliary film 16. This idea, however, results in an increased second temperature, thus poses another problem requiring an increased power of the laser source 20.

The method explained with reference to Fig. 2 thus has the following problems:

(1) Information is incapable of being recorded without two DC magnetic heads including a first DC magnetic head 17 for initial magnetization of the magneto-optic recording film 16 along a predetermined direction and a second DC magnetic head for recording an information signal in the magneto-optic recording film 3 digitally.

(2) Two types of laser beam outputs, one to secure a temperature higher than the Curie point of the magneto-optics recording film 3 but lower than the Curie point of the magneto-optic recording auxiliary film 16, and the other to secure a temperature higher than the Curie point of the magneto-optic recording film 3, must be controlled in combination in recording an information signal digitally in the magneto-optic recording film 3.

(3) The temperature difference between the Curie point of the magneto-optic recording film 3 (140°C for TbFe amorphous) and that of the magnetic auxiliary film 16 (160°C for GdTbFe amorphus) is set in a very narrow range of 20°C, thereby making it very difficult to control the laser beam output.

(4) The temperature difference in (3) above might be increased by use of a magneto-optic recording auxiliary film high in Curie point to the extent that the output of the second laser beam used in (2) is greatly increased, requiring a larger power of the laser source.

(5) The auxiliary magneto-optic recording film 16 of GdTbFe amorphus of the magneto-optic recording film described in Fig. 2 is exposed to the atmosphere, and therefore is liable to be corroded by the oxygen and moisture of the air. With the progress of corrosion of the film 16, the magneto-optic recording film 3 is also corroded. The shelf life of the magneto-optic recording medium is thus very short.

Further, in the conventional system disclosed in JP-A-60-48806, the signal recording is not possible unless a magnetic field is applied to the portion of the magneto-optic recording film 3 which is increased in temperature by the laser beam 6 as shown in Fig. 1A. For this purpose, the center axis of the magnetic core 24 is rendered to coincide with that of the laser beam 6, that is, the optical axis of the focus lens 7.

Nevertheless, this arrangement of the magnetic core 24 and the focus lens 7 makes it impossible to construct the magnetic field generating means with a magnetic path closed by the magnetic core, resulting in an increased magnetic reluctance. If a magnetic field with a sufficient intensity to reverse the magnetization of the magneto-optic recording film 3 is to be generated, therefore, it is necessary to increase the current flowing in the coil 8 greatly. This poses the problems of an increased power consumption and makes high-speed data transfer impossible under the effect of the coil inductance or through rate of the drive circuit.

Accordingly, a first object of the present invention is to obviate these problems and provide a magneto-optic recording medium with a long shelf life and a method of magneto-optic recording and reproduction using the medium, by which the power consumption is reduced, a high-speed data transfer is realized, the intensity of the laser beam for recording is easily set, and it is possible to use a laser source of low power.

In order to achieve this object, there is provided according to one aspect of the present invention a magneto-optic recording medium and a method of magneto-optic recording and reproduction in which a multilayered recording film including a magneto-optic recording film and a perpendicular magnetization film are formed on a transparent substrate, the perpendicular magnetization film being small in coercive force at room temperature and sufficiently high in Curie point at room temperature as compared with the magneto-optic recording film.

According to another aspect of the present invention there is provided a magneto-optic recording meidum and a method of magneto-optic recording and reproduction, in which a recording film of a recording medium is formed of a multilayered structure including a perpendicular magnetization film and a magneto-optic recording film having a magnetic anisotropy along the perpendicular direction, the perpendicular magnetization film is so magnetized by a magnetic field reversible in direction according to the level of a signal to be recorded thereby to record the signal in the perpendicular magnetization film, and the magneto-optic recording film is increased in temperature thereby to transfer the magnetization of the perpendicular magnetization film to the magneto-optic recording film.

A second object of the present invention is to provide a magneto-optic recording medium and a method of magneto-optic recording and reproduction in which information is transferred from a perpendicular magnetization film 4 to a magneto-optic recording film 3 in Fig. 2, after which information completely independent of the information recorded in the magneto-optic recording film 3 is recorded in, reproduced from in the perpendicular magnetization film 4 or erased, thus making it possible to record both in the magneto-optic recording film 3 and the perpendicular magnetization film 4 as a magneto-optic recording medium.

A third object of the present invention is to provide a magneto-optic recording medium and a method of magneto-optic recording and reproduction in which the magneto-optic recording film has laid thereon a perpendicular magnetization recording film capable of being recorded with information magnetically, made of a magnetic material as a main component resistant to the corrosion by the air oxygen or moisture, and has a property hardly penetrable by the oxygen gas or moisture in the air.

A fourth object of the present invention is to provide a magneto-optic recording medium and a method of magneto-optic recording and reproduction in which the whole outer surface of the perpendicular magnetization film is formed of a protective film (such as of a film spattered with aluminum metal or alumite), thereby improving the durability of the information recorded in the magneto-optic recording medium.

BRIEF DESCRIPTION OF THE DRAWINGS

Figs. 1A and 1B are a schematic diagram showing a conventional magneto-optic recording medium of overwrite type and a method of recording with such a medium and a block diagram showing the whole configuration of the system.

Fig. 2 is a schematic diagram showing another conventional magneto-optic recording medium and a method of recording using such a medium.

Figs. 3A and 3B are sectional views showing a construction of a magneto-optic recording medium according to an embodiment of the present invention.

Fig. 4A is a schematic diagram showing a system for embodying a method of magneto-optic recording according to the above-mentioned embodiment.

Fig. 4B is a diagram showing a general configuration of another embodiment .of a method of magneto-optic recording similar to Fig. 4A.

Fig. 5 is a sectional view showing a construction of a magneto-optic recording medium formed into a magneto-optic disk actually in use with the construction of Figs. 3A and 3B.

Fig. 6 is a sectional view showing another example of the construction of the magneto-optic recording medium according to the present invention.

Fig. 7 is a diagram showing general configuration of a system for effecting the magneto-optic recording on the magneto-optic recording medium illustratively shown in Fig. 6.

Fig. 8A is a diagram showing the temperature/coercive force characteristics of the magneto-optic recording film and the magnetic recording film making up the magneto-optic recording media used in respective embodiments.

Fig. 8B is a characteristic diagram showing the relationship between the lapse of time and a reproduction signal for a magneto-optic recording medium according to the prior art and an embodiment of the present invention.

Fig. 9 is a diagram showing the magnetic characteristic (coercive force) and the temperature dependency characteristic of the magneto-optic recording medium, the recording film and the auxiliary film shown in Fig. 4A.

DESCRIPTION OF THE PREFERRED EMBODIMENTS

(Embodiment 1)

An embodiment of the present invention will be explained with reference to the accompanying drawings.

Figs. 3A and 3B show sectional views of an embodiment of a magneto-optic recording medium according to the present invention. Reference numeral 1 designates a transparent substrate, numeral 2 an enhanced film, numeral 3 a magneto-optic recording film, and numeral 4 a perpendicular magnetization film. Numeral 4b designates a film for protection against the oxygen gas and moisture.

In Figs. 3A and 3B, the enhanced film 2 is formed on the substrate 1, and the magneto-optic recording film 3 having an anisotropic characteristic on the enhanced film 2 perpendicular (along the thickness of the film). The resulting structure further has formed thereon the perpendicular magnetization film 4 made of a ferromagnetic or ferrimagnetic material having a coercive force as small as 300 to 1200 Oe at room temperature against the magneto-optic recording film 3 and a sufficiently high Curie temperature of more than 300°C.

As an example, an enhanced film 2 of SiN is formed by sputtering in the thickness of 700 Å on the glass substrate 1, and a TbFeCo amorphus film 1000 Å thick is formed by sputtering to provide a magneto-optic recording film 3 thereon. Further, a CoCr magnetic film is formed by sputtering in the thickness of 1000 Å as a perpendicular magnetization film 4 to produce a magneto-optic recording medium. The characteristics of the magneto-optic recording film 3 and the perpendicular magnetization film 4 of an actual example of such a recording medium are shown in the table below.

Table 1

| | Hc (Oe) | | Ms (emu/cc) | | Tc/Tcomp |
| --- | --- | --- | --- | --- | --- |
| | 25°C | 160°C | 25°C | 160°C | |
| TbFeCo photo-magnetic recording film | 6000 | 200 | 110 | 65 | 80°C (Tcomp) 190°C (Tc) |
| CoCr perpendicular magnetization film | 700 | 630 | 270 | 245 | 300°C (Tc) |

In this table, character Hc designates the coercive force, Ms the saturated magnetization, Tc the Curie point and Tcomp the compensation temperature. The protective film 4b in Fig. 3B is made of such a material as metal aluminum, alumite or non-magnetic stainless steel and formed by sputtering or the like process.

Now, a method of recording a signal according to this embodiment will be explained with reference to Fig. 4A. The magnetic head 8 and the laser mechanism are configured in the conventional manner shown in Fig. 1B.

In Fig. 4A, the magnetic head 8 is arranged on the perpendicular magnetization film 4 side of the magneto-optic recording medium 5. A focus lens 7 is arranged on the substrate 1 side of the magnetic head 8 along the direction of motion of the magneto-optic recording medium 5 (arrow A).

An excitation current modulated by a signal to be recorded flows in a coil 8′ of the magnetic head 8, whereby a magnetic field is generated from the magnetic head 8. The maximum intensity of this magnetic field is set to a level higher than the coercive force of the perpendicular magnetization film 4 at room temperature and lower than the coercive force of the magneto-optic recording film 3 at room temperature. The film 4 is thus magnetized by saturation along the vertical direction (along the film thickness) by the magnetic field due to the magnetic head 8. The signal to be recorded, on the other hand, is a digital one and the excitation current i is modulated into different polarities in accordance with the "1" or "0" bit status of the digital signal. The direction of the magnetic field generated from the magnetic head 8 is therefore reversed in accordance with the "1" or "0" bit status of the digital signal, so that the direction of magnetization of the perpendicular magnetization film 4 by the magnetic field is also reversed in similar fashion, thereby recording the digital signal in the perpendicular magnetization film 4 as a magnetization pattern.

On the other hand, a laser beam 6 of a predetermined strength is focused and radiated on the magneto-optic recording film 3 through a focus lens 7. As a result, the magneto-optic recording film 3 is increased to a temperature of a level higher than the Curie point Tc of the magneto-optic recording film 3 and lower than the Curie point Hc of the perpendicular magnetization film 4, which temperature level is obtained by the appropriate setting of the power of the laser beam 6.

As a consequence, the magnetization pattern of the perpendicular magnetization film 4 is not erased by the radiation of the laser beam 6, and the portion of the magneto-optic recording medium 3 increased in temperature is magnetized by the magnetic field along the direction due to the magnetized portion of the perpendicular magnetization film 4 along the direction of the magnetic field. In other words, the magnetization pattern of the perpendicular magnetization film 4 is transferred to the magneto-optic recording film 3 thereby to record a digital signal in the magneto-optic recording film 3 as a magnetization pattern.

In this way, the heating temperature of the magneto-optic recording film 3 by radiation of the laser beam 6 is set between the Curie point Tc of the magneto-optic recording film 3 and the Curie point Tc of the perpendicular magnetization film 4. The greater the difference between these temperatures, therefore, the more the setting accuracy of the heating temperature is relaxed, thereby facilitating the power setting of the laser beam 6. This heating temperature may be set at a lower than the Curie point Tc of the perpendicular magnetization film 4 as long as it is higher than the Curie point Tc or the compensation temperature Tcomp of the magneto-optic recording film 3, and therefore it is possible to use a laser source low in power with a decreased power of the laser beam 6.

Table 1 represents a case in which the heating temperature due to the laser beam 6 is set to 200°C higher than the Curie temperature Tc of the magneto-optic recording film 3 of TbFeCo amorphus and lower than the Curie point Tc thereof at room temperature. The recording-reproduction characteristics obtained by recording under the above-mentioned conditions, as compared with those of the prior art in Fig. 1A, are shown in the table below.

Table 2

|  | C/N (dB) | Overwrite (dB) | Excitation current (mA) |
|---|---|---|---|
| Embodiment | 55 | -45 | 20 |
| Prior art | 55 | -45 | 200 |

The figures in this table are obtained by measurement in the situation where the magneto-optic recording medium shown in Fig. 1A is made up of a substrate 1, an enhanced film 2 and a magneto-optic recording film 3 of the same material and thickness as those included in the embodiment under consideration, and has a protective film 4 of SiN 1000 Å thick and where in both the embodiment and the prior art, the laser power is set to 7 mW, the speed of the magneto-optic recording medium relative to the recording means to 7 m/sec, and the frequency of the recording signal to 2.5 MHz. It is clear from Table 2 that an overwrite is obtained to the same degree with an excitation current i smaller than in the prior art. The maximum frequency for which an overwrite of -35 dB could be obtained is 4 MHz for the conventional case compared with the present embodiment and 10 MHz for the present embodiment.

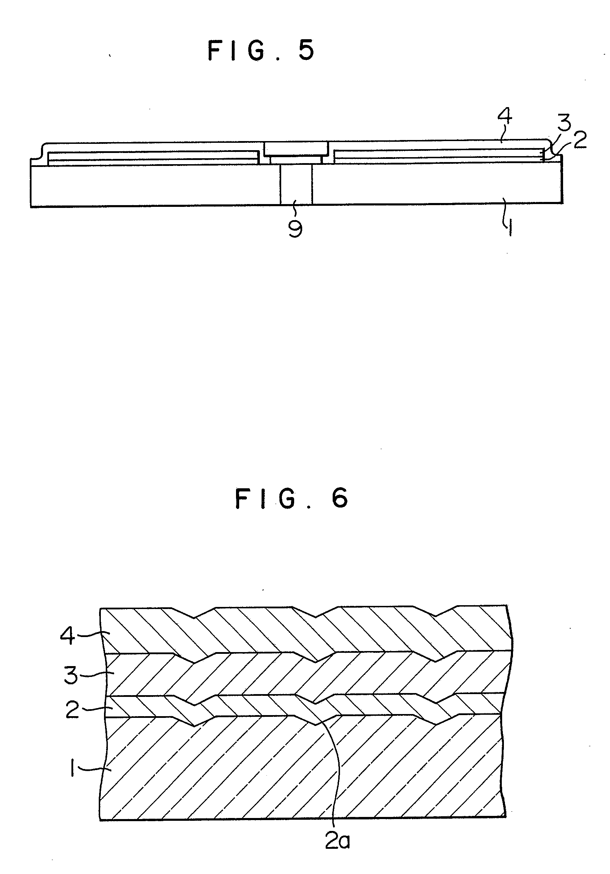

Fig. 5 is a sectional view of the whole magneto-optic recording medium shown in Figs. 3A and 3B. Numeral 9 designates a center hole.

A perpendicular magnetization film 4 of CoCr group indicated by $Co_{1-x}Cr_x$ with x of about 0.15 to 0.25 was used. Especially when x is not smaller than 0.20, this film has a function as a protective film with a superior corrosion resistance. The materials of the perpendicular magnetization film 4 that can be used other than CoCr include CoRe, CoRu, and CoPt. The materials of the magneto-optic recording film 3 that can be used, on the other hand, include GdTbFeCo, CdDyFeCo and TbFe.

In writing a data in a magneto-optic recording medium having a configuration of Figs. 3A and 3B by the system illustratively shown in Fig. 4A, the data is written in the perpendicular magnetization film 4 by use of the magnetic head 8, and under this condition, the laser beam 6 is radiated thereby to transfer the data recorded in the perpendicular magnetization film 4 to the magneto-optic recording film 3. After this transfer, the laser beam 6 of a predetermined low output for read operation is used to read the data written by transfer in the magneto-optic recording film 3.

By use of the magnetic head 8, on the other hand, a data different from that transferred to the magneto-optic recording film is written again the perpendicular magnetization film 4 and may be read by use of a read magnetic head (not shown) separately provided or the magnetic head 8 configured for write/read processes. In this way, different independent data may be recorded in two layers in the films 4 and 3. In this magneto-optic recording medium, the previously-recorded data is erased by overwrite. If a data of high confidential nature is to be erased, however, the data of "0" is written in the perpendicular magnetization film by use of the magnetic head 8 and is transferred to the magneto-optic recording film 3.

(Embodiment 2)

Fig. 4B is a diagram for explaining a second embodiment of the present invention. Numeral 23 designates a main magnetic pole, numeral 22 an auxiliary magnetic pole, and 4 a perpendicular magnetization film. Those component parts corresponding to the parts shown in Fig. 1A are designated by similar reference numerals respectively.

In Fig. 4B, a recording medium 25 comprises a transparent substrate 1, a magnetic recording film 3 formed thereon and having a magnetic anisotropy along the vertical direction (along the film thickness), and a perpendicular magnetization film 4 formed thereon. The magneto-optic recording film 3 is made of a material sufficiently large in coercive force and low in Curie point at room temperature. The perpendicular magnetization film 4, by contrast, is comprised of a materials small in coercive force and sufficiently high in Curie point at room temperature. A main magnetic pole 23 is formed on the perpendicular magnetization film 4 side of the recording medium 25, and an auxiliary magnetic pole 22 with a coil 8 on the substrate side opposed thereto. The main magnetic pole 23, the auxiliary magnetic pole 22 and the coil 8 make up a head of auxiliary magnetic pole excitation type. Further, a focus lens 7 is disposed on the side of the substrate 1 backward of the head of the auxiliary magnetic pole excitation type along the direction (arrow A) of motion of the recording medium 25, whereby the laser beam 5 is focused on the magneto-optic recording film 3.

The main magnetic pole 23 and the auxiliary magnetic pole 22 in opposed relations with each other with the magneto-optic recording film inbetween are set in position along the forward direction of the write track from the optical head in the block configuration of Fig. 1B. The main magnetic pole 23, the auxiliary magnetic pole 22 and the coil drive circuit are connected in such a manner as to make up a closed loop, thus forming a closed magnetic circuit by the main magnetic pole 23 and the auxiliary magnetic pole 22 with the magneto-optic recording medium interposed therebetween.

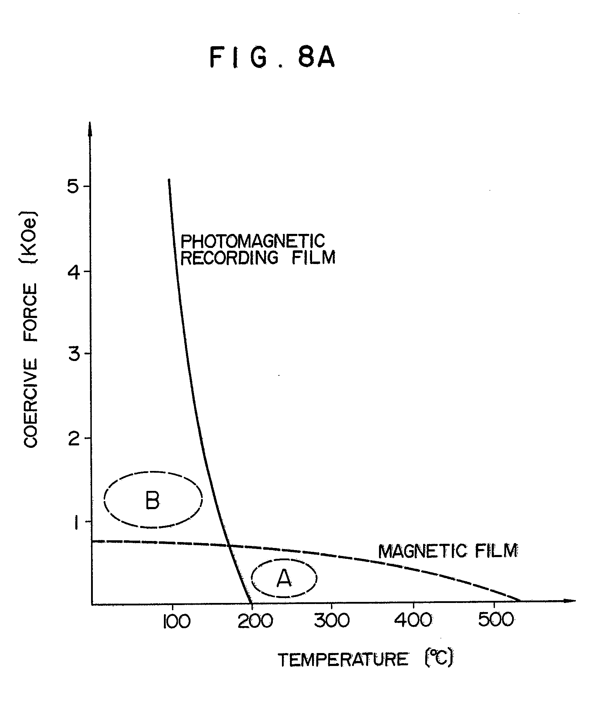

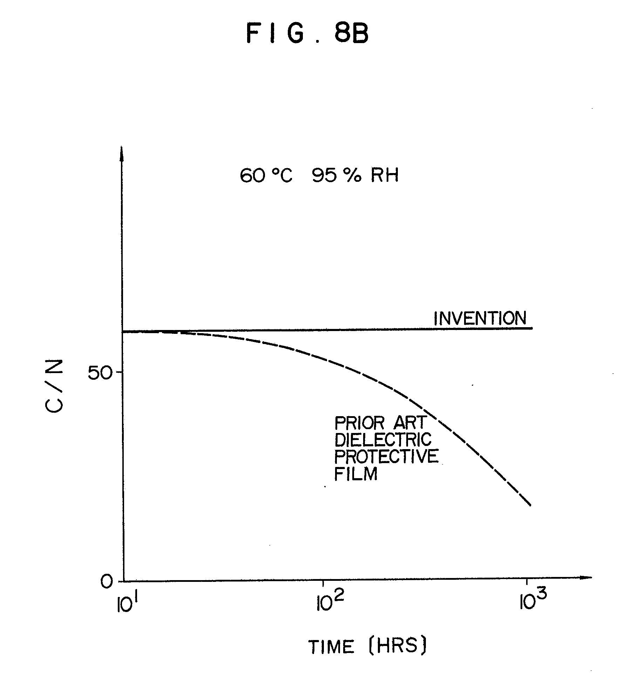

At the time of signal recording, a signal current i is supplied digitally through the coil 8. This signal current i, like the current in Fig. 8, is reversed in polarity in accordance with the bit status "1" or "0" of the digital signal, so that the direction of the magnetic field generated from the auxiliary magnetic pole 22 is reversed in accordance with the bit status "1" or "0" of the digital signal. The magnetic lines of force from the auxiliary magnetic pole 22 reach the main magnetic pole 22 through the recording medium 25. The sectional area of the main magnetic pole 23 is set sufficiently small as compared with that of the auxiliary magnetic pole 22, and therefore the magnetic lines of force from the auxiliary magnetic pole 22 are converged at the main magnetic pole 23 thereby to produce a strong magnetic field in the perpendicular magnetization film 4 located in proximity to the main magnetic pole 23. The signal current i flowing in the coil 8 is set to such a value that the intensity of the magnetic field in the magneto-optic recording film 3 is set sufficiently small as compared with the coercive force thereof at room temperature, and the intensity of the magnetic field in the perpendicular magnetization film 4 larger than the coercive force thereof at room temperature, whereby only the perpendicular magnetization film 4 is magnetized by the magnetic field and is recorded with a signal therein.

On the other hand, the laser beam 6 of a predetermined intensity is focused and radiated on the magneto-optic recording film 3 of the recording medium 25 by the focus lens 7 at a point rearward of the head of auxiliary magnetic pole excitation type along the direction of motion (arrow A) of the recording medium 25. As a result, not only the portion of the magneto-optic recording film 3 radiated with the laser beam 6 but also the portion of the perpenducular magnetization film 4 in proximity to the portion of the film 3 radiated with the laser beam 6 is also increased in temperature. The power of the laser beam 6, however, is set to such a level that the heating temperature of the perpendicular magnetization film 4 by the laser beam 6 is sufficiently low as compared with the Curie point thereof and the temperature increase by the laser beam 6 causes the coercive force of the magneto-optic recording film 3 to be smaller than the intensity of the magnetic field due to the magnetization of the portion of the magneto-optic film 4 in contact with the portion of the magneto-optic recording film 3 increased in temperature.

The magnetization of the perpendicular magnetization film 4 is thus not affected at all by the radiation of the laser beam 6, and the magneto-optic recording film 6 is magnetized by the magnetic field due to the magnetization of the perpendicular magnetization film 4, with the result that the magnetization pattern of the perpendicular magnetization film 4 is directly transferred to the magneto-optic recording film 3.

A signal is recorded in the magneto-optic recording film 3 in the manner mentioned above. In the process, a magnetic field is applied continuously to the perpendicular magnetization film 4 by the head of auxiliary magnetic pole excitation type for signal recording, while the continuous temperature increase by the laser beam 6 causes a magnetization pattern to be transferred from the perpendicular magnetization film 4 to the magneto-optic recording film 3 at the same time, thus making possible an overwrite possible without any means of erasure. Also, the means for generating a magnetic field for signal recording is capable of constructed with a closed magnetic loop of the main magnetic pole 23 and the auxiliary magnetic pole 22, thus improving the efficiency of generation of magnetic field. Further, in view of the fact that the sectional area of the main magnetic pole 23 is sufficiently smaller than that of the auxiliary magnetic pole 22 to converge the magnetic fluxes at the main magnetic pole 23, the intensity of the magnetic field of the perpendicular magnetization film 4 can be increased considerably. Even when the signal current in the coil 8 is reduced, therefore, it is possible to generate a strong magnetic field, thus saving the power consumption while increasing the speed of data transfer. The table below shows a comparison of the embodiment under consideration with the prior art shown in Fig. 1A using the same through rate of a drive circuit and the same inductance of a coil.

|  | Magnetomotive force (AT) | Switching rate (nsec) | Generated magnetic field (Oe) |
|---|---|---|---|
| Embodiment (Fig. 4B) | 0.7 | 15 | 700 |
| Prior art (Fig. 1A) | 6.0 | 40 | 300 |

The switching rate is the polarity-switching speed of the recording signal i, which is sufficiently high, making possible a high-speed data transfer according to the embodiment under consideration. At the time of reproduction, the recording medium 25 is radiated only with the low-power laser beam 6, and Kerr effect due to the magnetization of the reflected laser beam at the magneto-optic recording film 3 is detected by a detector to effect signal reproduction.

The means of magnetic field generation may be constituted by a head of main magnetic pole excitation type or a head of ring type. As an alternative, a laser beam for drawing or servo control may be used behind the laser beam 6.

In this embodiment, too, as in the first embodiment, two films may be used as independent recording media for writing different data for different applications.

As explained above, according to the first and second embodiments, the power of the laser beam can be saved and the setting accuracy of the power relaxed. At the same time, the excitation current for the magnetic field generation means may be reduced to realize a high-speed overwrite operation. Also, the signal current is reduced to generate a sufficiently strong magnetic field for the signal recording, resulting in a reduced power consumption and a smaller effect of the through rate of the drive circuit and the inductance of a coil, thus making possible a high-speed data transfer.

(Embodiment 3)

Fig. 6 is a sectional view showing a typical film configuration of a recording medium according to the present invention. In Fig. 6, reference numeral 1 designates a substrate, numeral 2a a signal pattern, numeral 2 an enhanced film, numeral 3 a magneto-optic recording film, and numeral 4 a magnetic recording film.

The substrate 1 is formed of such a transparent ceramics as glass, or a transparent resin material such as polycarbonate (PC), polymethyl methacrylate (PMMA), poly(4-methylpentene-1) or epoxy. A signal pattern such as a guide track corresponding to a tracking signal and a prepit corresponding to an address signal on one side of the substrate 1.

An appropriate means for forming the signal pattern 2a is used according to the material of the substrate 1. In the case where the substrate 1 is formed of a thermoplastic resin such as PC, PMMA or poly(4-methylpentene-1), for instance, what is called "the injection process" is used in which a molten substrate material is injected into an injection molding die to mold the substrate 1 integrally with a signal pattern. Other well-known means applicable to this substrate include what is called "the compression process" or "the injection-compression process" in which a molten substrate material is injected into an injection molding die and subjected to pressure. Further, if the substrate is formed of such a thermosetting resin material as expoxy or ceramics such as glass, on the other hand, a photo-curable resin is extended between a stamper (die) formed with an inverted pattern of the desired signal pattern and the substrate 1 to

8

transfer an inverted pattern of the stamper to the substrate. This process is commonly called the 2P process or photo-polymerisation process. In the case of a thermosetting resin such as epoxy, on the other hand, it is also possible to use what is called "the cast molding process" in which a molten substrate material is slowly injected into a die to mold the substrate 1 integrally with the signal pattern 2.

The enhanced film 2 is intended to increase the apparent Kerr rotation angle, and is made of such dielectric material as $Si_3N_4$ which is formed in the thickness of about 800 to 900 Å on the surface of the substrate 1 where the signal pattern 2a is produced. This enhanced film 2 may be formed by use of a vacuum film-forming process such as the vacuum evaporation or sputtering.

The magneto-optic recording film 3 is formed mainly of a well-known amorphus material such as TbFe, GdTbFe, TbDyFe, GdTbFe, $MnCuB_1$ (crystal), GdTbFeGe, GdCo, GdTbCo, TbFeCo, TbFe/GdFe, TbFe/GdFeCo, TbFeCo, TbDyFeCo (precious metal), TbFe, $TbN_1Fe$, TbCoFe, TbFe/GGG or DyFeGdCo. This magneto-optic recording film 3 is deposited on the enhanced film 2 by such a vacuum film-forming process as vacuum evaporation or sputtering.

The magnetic recording film 4 is formed of a magnetic material higher in Curie temperature and lower in coercive force at room temperature than the magneto-optic recording film 3. The magnetic recording film 4 may be made of any base magnetic material traditionally used for a magnetic recording medium including a magnetic disk, a magnetic drum or a magnetic tape. For the purpose of increasing the freedom of the recording conditions for easier operation, however, the better, the greater the difference from the magneto-optic recording film 3 in Curie temperature and the coercive force at room temperature. Such a material may be either polycrystal or amorphus to the extent that the above-mentioned conditions are satisfied.

Examples of materials actually used include such magnetic powder as $\gamma$-$Fe_2O_3$, $Fe_2O_4$, $\gamma$-$Fe_2O_3$ containing cobalt, $Fe_3O_4$ containing cobalt, iron, cobalt or iron-nickel alloy which is coated and dried together with a binding agent and an organic solvent, or such a ferromagnetic material as cobalt, iron, nickel, cobalt-nickel alloy, cobalt-chromium alloy, cobalt-phosphorus alloy or cobalt-nickel-phosphorus alloy which is formed into a layer in vacuum. Of all these materials, a perpendicular magnetization film mainly composed of the cobalt-chromium alloy or a horizontally magnetized film with the cobalt-nickel alloy as a main component is especially preferable.

The thickness of the magnetic recording film 4 should be as thick as possible for protection of the magneto-optic recording film 3. If the thickness is excessive, however, the coefficient of thermal conductivity increases so much that the recording sensitivity of the magneto-optic recording film 3 is undesirably reduced. The proper thickness, therefore, is about 1000 Å to 1 $\mu$m.

Also, it is especially preferable to cover the outer surface of the magnetic recording film 4 with a protective film like the one shown in Fig. 1B in order to greatly improve the shelf life of the information stored in the magneto-optic recording film. This protective film may preferably be formed by sputtering of aluminum, alumite, stainless steel or the like material in any thickness ranging from 50 Å to 106 Å.

The principles of recording and reproduction of a recording medium according to the present invention will be explained below.

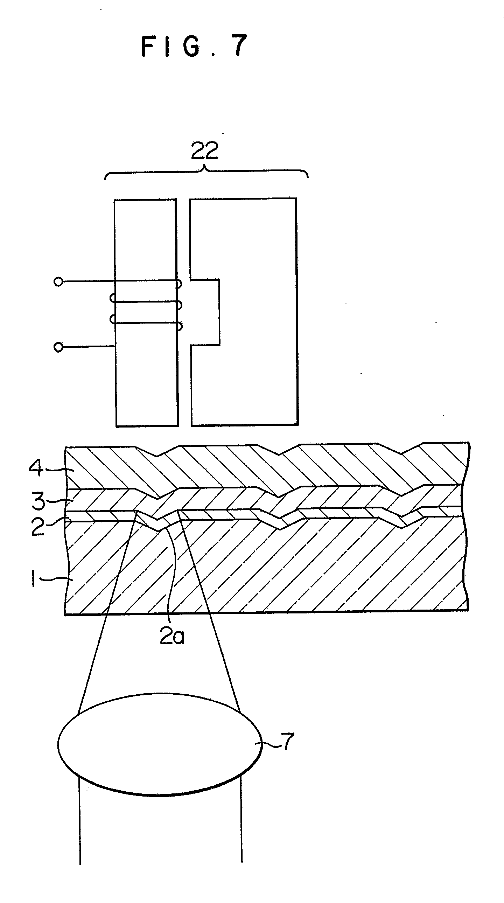

For the purpose of recording and reproduction of the recording medium according to the present invention, an optical head 7 is arranged on the side of the substrate 1 and a magnetic head 22 on the side of the magnetic film 4 as shown in Fig. 7. The magnetic head 22 has the function of an electromagnetic coil for recording information in the magneto-optic recording film 3 and that of a magnetic head for recording information on the magnetic recording film 4 at the same time. This magnetic head 22 is set up in such a manner as to be raised from the surface of the magnetic recording film 4 by about 1 $\mu$m by the viscous laminar flow of the air caused by the driving of the recording medium.

In recording the information in the magneto-optic recording film 3, the magneto-optic recording film 3 and the magnetic recording film 4 are radiated continuously from an optical head 7 with a laser beam of such an intensity as to heat the magneto-optic recording film 3 beyond the Curie point thereof but not higher than the Curie point of the magnetic recording film 4, by driving a laser beam source not shown. At the same time, the magnetic head 22 is driven to generate a signal magnetic field smaller in intensity than the coercive force of the magnetic recording film 4 at room temperature as of the radiation of the laser beam and having a polarity along the recording direction perpendicular to the surface of the magneto-optic recording film 3. In this way, the portion of the magneto-optic recording film 3 which is radiated with the laser beam is heated beyond the Curie point thereof and reduced to zero in coercive force, so that a reversal domain corresponding to the information signal is sequentially formed in accordance with the signal magnetic field of the magnetic head 22 thereby to effect information recording. In the process, the magnetic recording film 4 having a Curie point higher than the magneto-optic recording film 3 is not reduced in coercive force below the DC magnetic field intensity of the magnetic field even under radiation of the laser beam, and therefore no information is written in the film 3.

Since the recording medium according to the present invention has a thin magnetic recording film 4 formed on the magneto-optic recording film 3, a magnetic head (electromagnetic coil) may be set in close vicinity of the magnetic recording film 4. As a result, the need of a large-sized magnetic head 22 is eliminated while a high-speed switching operation of the magnetic field is made possible as required for reversal of the magnetization of the magneto-optic recording film 3, thus realizing the magnetic field modulation system described above.

This magnetic field modulation system, like the conventional magnetic recording medium, permits a new data to be overwritten on the already-recorded data without erasing the already-recorded data, thus remarkably contributing to an improved access speed.

Means of recording in the magneto-optic recording film 3 are not limited to this magnetic field modulation system, but an optical modulation system may be used with equal effect as in the conventional magneto-optic recording media of lamination type.

In recording information in the magnetic recording film 4, the magnetic head 4 is driven to generate a magnetic field signal having an intensity larger than the coercive force of the magnetic recording film 4 at room temperature and having a polarity along the recording direction smaller than the coercive force of the magneto-optic recording film 3 at room temperature. As a consequence, a domain having a direction of magnetization corresponding to positive and negative recording signals is formed in the magnetic recording film 4 for recording the information. In the process, in the absence of a magnetic field exerted larger than the coercive force of the magnet-optic recording film 3 at room temperature, neither information is written in the magneto-optic recording film 3 nor is any information in the magneto-optic recording film 3 erased.

In the process of reading the information from the magneto-optic recording film 3, on the other hand, a laser beam source not shown is driven to radiate a linearly polarized light on the magneto-optic recording film 3 from the optical head 7. This linearly polarized light is regulated to such an intensity as not heat the magneto-optic recording film 3 beyond the Curie point thereof. The light reflected from the magneto-optic recording film 3 has the plane of polarization thereof rotated between the parts with and without reversal domain (Kerr effect). By detecting the difference in the direction of rotation of the plane of polarization of the reflected light by a photo-detector as a difference in light intensity, therefore, it is possible to reproduce the information.

In reading the information from the magnetic recording film 4 storing the information, on the other hand, as in the conventional magnetic recording media, the change in magnetic fluxes caused from the recording bit domain recorded in the magnetic recording film 4 is subjected to electromagnetic conversion through the gap of the magnetic head 22. In the process, the tracking of the magnetic head 22 is capable of being subjected to accurate servo control by interlocking with the optical head 22 or by utilization of the tracking signal read from the optical head 22.

The effect of the present invention will be described below with reference to a specific embodiment.

(Embodiment 4)

An enhanced film of $Si_3N_4$ is formed in the thickness of about 900 Å on the signal pattern side of a polycarbonate substrate formed by injection, and a magneto-optic recording film of an amorphus alloy of the following composition is deposited on this enhanced film by sputtering:

Terbium: 20 to 27 atomic %

Cobalt: 8 to 13 atomic %

Niobium, titanium or chromium: 2 to 5 atomic %

Iron: The remainder

Then, a base layer germanium or titanium for promoting the crystalline orientation of the magnetic recording film is formed in the thickness of about 200 to 300 Å is laid on the magneto-optic recording film.

Finally, a magnetic recording film about 2000 Å thick of a cobalt-chromium (with chromium content of 20 to 25 atomic %) is deposited on the base layer by the vacuum film-forming process. This magnetic recording film has a C axis of hexagonal system that is an easy-to-magnetize axis perpendicular to the film surface, thus making up what is called a perpendicular magnetization recording film.

(Embodiment 5)

In the same amnner as in the embodiment 4, a polycarbonate substrate, an enhanced film and a photo-magnetic recording film are formed, and a magnetic recording film of a cobalt-nickel alloy (with nickel content of 20 to 40 atomic %) with 2 to 3 atomic % of platinum or chromium added for improving the anticorrosiveness thereto is deposited to the thickness of 1000 Å by the vacuum film-forming process on the magneto-optic recording film. This magnetic recording film provides what is called a horizontally magnetized recording film having an easy-to-magnetize axis within the film surface.

The table below shows the magnetic characteristics of the magneto-optic recording film and other magnetic films deposited on the surface thereof in the fourth and fifth embodiments described above.

|  | Curie point | Coercive force at room temperature |
|---|---|---|
| magneto-optic recording film | 170 to 230° C | 5 (KOe) to 15 (KOe) |
| Cobalt-chromium alloy | 500° C or more | 300 (Oe) to 1 (KOe) |
| Cobalt-nickel alloy | 700° C or more | 500 (Oe) to 900 (Oe) |

Fig. 8A shows general temperature characteristics of the magneto-optic recording films and the magnetic recording films used in the respective embodiments describe above. In this graph, the ordinate represents the coercive force of the recording films, and the abscissa the temperature. As obvious from this graph, the magneto-optic recording film has a high coercive force of about 5 (KOe) at temperatures from room temperature to about 100°C, but when heated to more than 100°C, its coercive force is sharply reduced until it loses its entire coercive force at about 200°C. In contrast, the magnetic recording film has a coercive force of about 700 (Oe) at room temperature which is much lower than that of the magneto-optic recording film. With the increase in temperature, this coercive force is gradually reduced until it is entirely lost at a temperature as high as more than 500°C.

As a result, as indicated from the region A in Fig. 8A, if the recording films (including the lamination of the magneto-optic recording film and the magnetic film) are heated to a temperature higher than the Curie point of the magneto-optic recording film but lower than the Curie point of the magnetic recording film and if a magnetic field of an intensity smaller than the coercive force of the magnetic recording film at the temperature of radiation of the laser beam is exerted on the magneto-optic recording film, then information is capable of being recorded only in the magneto-optic recording film.

As shown by the region B in Fig. 8A, on the other hand, upon exertion of a magnetic field stronger than the coercive force of the magnetic recording film at room temperature and smaller than the coercive force of the magneto-optic recording film at room temperature, information may be recorded only in the magnetic film.

As a result, information may be recorded independently in the magneto-optic recording film and the magnetic recording film respectively, thus making it possible to increase the apparent recording capacity twofold as in the case of a recording medium of lamination type. The recording-reproduction characteristics of the magneto-optic recording film and the magnetic recording film are substantially identical to those of the films in independent state, and are not deteriorated by lamination thereof.

Fig. 8B shows the result of an accelerated environmental test conducted on the recording media according to the embodiments 4 and 5 described above and a conventional magneto-optic recording film with a protective film of dielectric material deposited on a magneto-optic recording film. The ordinate of the graph represents the C/N ratio of a reproduction signal, and the abscissa the time. Test conditions included the atmospheric temperature of 60°C, the relative humidity of 95% and the testing time of 1000 hours. As seen from this graph, the reproduction signal for the conventional product is reduced in C/N ratio by about 30% after the test, while the C/N ratio of the recording medium according to the present invention did nto decrease at all after the test. This indicates that the recording medium according to the present invention superior to the conventional products in the storage stability of information.

The present invention is not limited to the disk-like recording medium explained in the aforementioned embodiments, but is also applicable with equal effect to a card-like or tape-like recording medium or other magneto-optic recording media of a given type.

Also, the technique of using a magnetic recording film as a protective film for a magneto-optic recording medium is applicable not only to a magneto-optic recording medium but also to an optical recording medium of write-once type with tellurium as a main component.

(Embodiment 6)

A magneto-optic recording medium shown in Fig. 5 as configured according to another embodiment of the present invention comprises a magneto-optic recording film 3 and a film 4 which has both the functions of a magnetic recording film and a protective film for magneto-optic recording film at the same time. This magneto-optic recording medium has the following features:

(1) Usable as a two-side recording medium in which information reccrded in the film 4 is recorded by transfer to the magneto-optic recording film 3 in accordance with the embodiment 1, which information may be reproduced or erased, while information independent of the information recorded in the magneto-optic recording film 3 may be recorded in, reproduced from or erased in the film 4.

(2) Usable as a two-side recording medium in which the portion of the magnetic recording film on the other side of the portion of the magneto-optic recording film 3 having no information recorded therein is usable with information recorded, reproduced or erased therein.

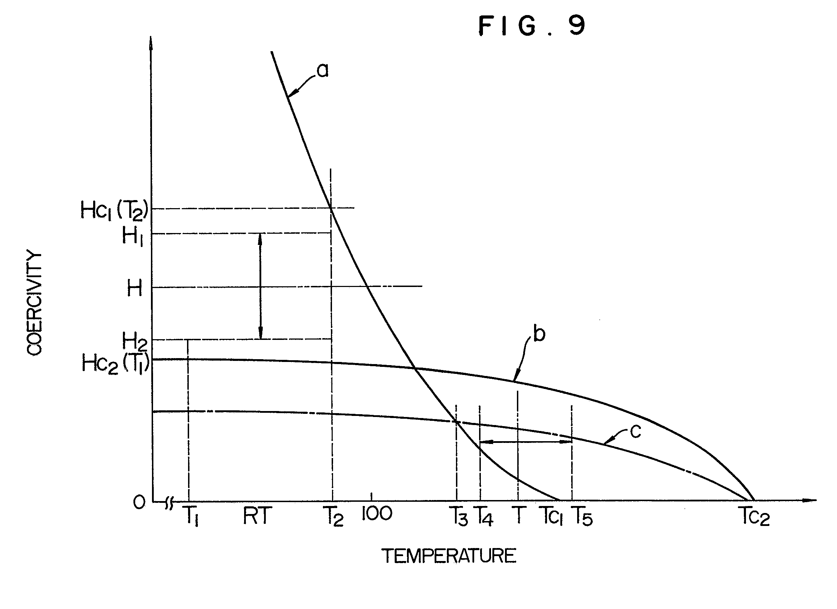

The features of (1) and (2) described above are realized on conditon that the Curie point $Tc_2$ of the magnetic recording film 4 is higher than the Curie point $Tc_1$ of the magneto-optic recording film 3, that the coercive force of the magnetic recording film 4 at room temperature is smaller than that of the magneto-optic recording film 3, and that the coercive force of the film 3 at $Tc_1$ is smaller than that of the film 4 at $Tc_1$. The relationship between the characteristics of the magnetic recording film 4 and the magneto-optic recording film 3 satisfying these conditions is shown in Fig. 9.

Fig. 9 shows the temperature dependency of the magnetic characteristics (coercive force) of the recording film 3 and the auxiliary film 4 of a magnetic-optic recording medium constructed as shown in Fig. 4A. The process of recording will be explained with reference to this diagram.

In the diagram, curves $a$ and $b$ represent the coercive force-temperature characteristics of the recording film 3 and the auxiliary film 4 respectively, and $Tc_1$ and $Tc_2$ Curie points of respective films.

An operating environment is set at a temperature near room temperature (RT) between a lower limit $T_1$ and an upper limit $T_2$. Assume that the coercive force of the auxiliary film 4 at temperature $T_1$ is $Hc_2$ $(T_1)$ and that of the recording film 3 at temperature $T_2$ is $Hc_1$ $(T_2)$. If the intensity H of the applied magnetic field due to the magnetic head is set to satisfy the condition $Hc_2(T_1) < H < Hc_1(T_2)$, the auxiliary film 4 alone may be magnetized without affecting the recording magnetization of the recording film 3. Information may thus be recorded only in the auxiliary film 4. The applied magnetic field H is of course more desirably set to satisfy the condition $H_2 < H < H_1$ as shown in the diagram taking the environmental change and the compatibility of the medium into consideration.

The information recorded in the auxiliary film 4 is transferred for recording in the recording film 3 in the manner mentioned below. The curve C in the diagram represents the magnetic field generated at the position of the recording film 3 by the magnetization of the auxiliary film 4. The intensity of this magnetic field is proportional to the saturated magnetization of the auxiliary film 4. Assume that the temperature at the intersection of the curves $\underline{a}$ and $\underline{c}$ is $T_3$. If the temperature T of the recording film 3 is increased beyond $T_3$ by laser beam, the coercive force of the recording film 3 is reduced below the intensity of the magnetic field generated from the auxiliary film 4, and therefore the magnetization of the recording film 3 is oriented along the direction of magnetization of the auxiliary film 4 thereby to transfer the recorded information. More desirably, the temperature T increased by the laser beam should be set to satisfy the condition $T_4 < T < T_5$ by regulation of the laser power. If the conditions for radiation are set in the manner mentioned above, the independent recording in the auxiliary film 4 and the transfer of the recording to the recording film 3 through the auxiliary film 4 are made possible.

## Claims

1. A magneto-optic recording medium comprising a transparent substrate (1), a magneto-optic recording film (3) having a vertical anisotropic characteristic formed on the transparent substrate (1), and a perpendicular magnetization film (4) formed on the magneto-optic recording film (3), the perpendicular magnetization film (4) having a small coercive force at room temperature and a sufficiently high Curie point, the magneto-optic recording film (3) and the perpendicular magnetization film (4) making up a multilayered recording film.

2. A magneto-optic recording medium according to claim 1, wherein the perpendicular magnetization film (4) is made of a ferromagnetic material or a ferrimagnetic material with a coercive force of 300 to 12000 Oe at room temperature and a Curie point of at least 300°C.

3. A magneto-optic recording medium according to claim 1 or claim 2 wherein the perpendicular magnetization film (4) is constructed of a magnetic material including at least one of Co, Fe and Ni or an alloy of any combination thereof.

4. A magneto-optic recording medium according to any one of claims 1 to 3 wherein the magneto-optical recording film (3) is constructed of a magnetic material including an alloy containing Tb and Fe.

5. A magneto-optic recording medium according to any one of claims 1 to 4 further comprising a protective film (4b) of at least one of aluminium, alumite, stainless steel or any combination thereof and ceramics.

6. A magneto-optic recording medium comprising a magneto-optic recording film (3) having a magnetic anisotropic characteristic along the direction perpendicular to a transparent substrate (1) and a perpendicular magnetization film (4) deposited on the magneto-optic recording film (3). the medium being adapted for use as a two-side recording medium capable of recording and reproducing different information in the magneto-optic recording film (3) and the perpendicular magnetization film (4) at the same time.

7. A method of magneto-optic recording comprising the steps of:
forming a multilayered recording film as a recording medium on a transparent substrate (1), the multilayered recording film including a magneto-optic recording film (3) having a magnetically anisotropic characteristic in the direction perpendicular to the transparent substrate (1) and a perpendicular magnetization film (4) small in coercive force at room temperature and sufficiently high in Curie point;
supplying the perpendicular magnetization film (4) with a magnetic field with the direction thereof reversed in accordance with the signal level of the desired recording signal thereby to record the desired signal in the perpendicular magnetization film (4); and
transferring the magnetization record of the perpendicular magnetization film (4) to the magneto-optic recording film (3) by increasing the temperature of the magneto-optic recording film (3), thus recording the desired recording signal in the magneto-optic recording film (3).

8. A method of magneto-optic recording according to Claim 7, further comprising the steps of:
recording by magnetization another recording signal anew in the perpendicular magnetization film (4) after the transfer of the desired signal to the magneto-optic recording film (3);
magnetically reading the recording signal from the perpendicular magnetization film (4); and
optically reading the signal recorded in the magneto-optic recording film (3).

9. A method of magneto-optic recording according to claim 7 or claim 8 wherein the temperature of the magneto-optic recording film (3) is increased by the radiation of a laser beam.

10. A method of magneto-optic recording according to Claim 8, wherein the signal recorded in the magneto-optic recording film (3) is read optically by the radiation of a laser beam.

# FIG. IA
## PRIOR ART

CENTER LINE

# FIG. 2
## PRIOR ART

# FIG. IB PRIOR ART

EP 0 313 334 A2

# F I G . 3A

# F I G . 3B

# F I G . 4A

# F I G . 4B

# F I G . 5

# F I G . 6

# FIG. 7

# F I G . 8A

# F I G . 8B

60 °C   95 % RH

INVENTION

C / N

50

PRIOR ART
DIELECTRIC
PROTECTIVE
FILM

0

$10^1$          $10^2$          $10^3$

TIME (HRS)

FIG. 9

EP 0 313 334 A2